# EUROPEAN PATENT APPLICATION

(11) **EP 3 322 158 A1**
(43) Date of publication of application: **16.05.2018**
(21) Application number: 16823803.8
(22) Date of filing: 04.07.2016
(51) Int. Cl.: H04L 29/14, H04L 12/703

(54) **METHOD AND DEVICE FOR REALIZING SERVICE BACKTRACKING**

(30) Priority: 10.07.2015 CN 201510408349
(71) Applicant: ZTE Corporation, Shenzhen, Guangdong 518057 (CN)
(72) Inventor: JIANG, Ningning, Shenzhen Guangdong 518057 (CN)
(74) Representative: Lavoix
(86) International application number: PCT/CN2016/088373
(87) International publication number: WO 2017/008656

(57) **Abstract**

Disclosed is a method for realizing service backtracking, which is applied to a software defined network controller. The method comprises: after failing to establish a sub-network connection (SNC) of a service according to a current route, determining a failed node; enquiring service backtracking attribute information about the service; and when the service satisfies a service backtracking condition, performing service backtracking on the service.

## Description

### TECHNICAL FIELD

The disclosure relates to, but not limited to the technical field of optical communications, and in particular to a method and device for implementing service backtracking.

### BACKGROUND

A current Software Defined Network (SDN) technology has become a hot topic under discussion at present, and becomes a hot topic researched at present due to the characteristics of centralized control, control and forwarding separation, various personal customized APPs and the like. The SDN technology is gradually introduced into the field of bearer networks (mainly referring to a Packet Transport Network (PTN) and an Optical Transport Network (OTN)), but relevant standards are still in bud and preparation.

The whole research on optical network based SDN is still in an initial stage at present. Under the existing SDN framework, once setup of a service issued by a northbound APP encounters a problem of handling at a device side, this service is doomed to fail. When there are various patterns of optical network devices, it is very often that a device instruction is issued unsuccessfully, but there is not a good mechanism under the existing SDN framework to ensure the success rate of the service.

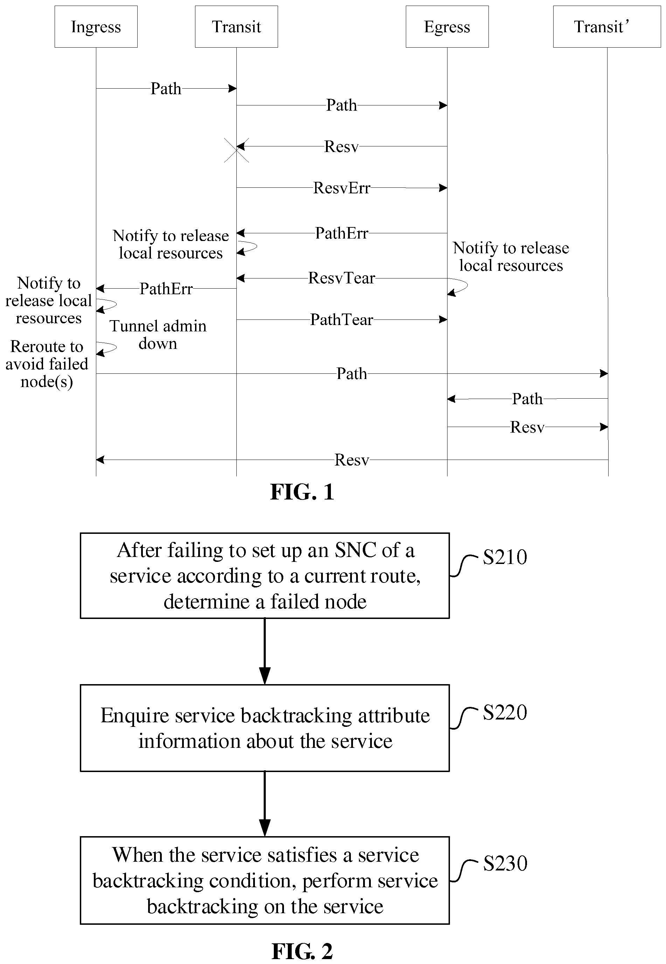

When actual configuration of a network node fails, in case of no alarm being reported, a method for avoiding a network node through automatic rerouting by means of a protocol is usually referred to as service backtracking. As shown in FIG. 1, under a Generalized Multiprotocol Label Switching (GMPLS) architecture, service backtracking includes steps as follows.

A Path message is sent downstream hop by hop from an ingress (head node) to apply for a label and issue an instruction to a device. When the Path message reaches an egress (tail node), a Resv (reservation) message is transferred to an upstream node(s) hop by hop from the egress, and the node(s) receiving the message checks an execution result of the instruction. When the Resv message is transferred to a transit(s) (intermediate node(s)), it is checked that an instruction issued to the device by the transit is executed unsuccessfully, and at this time, execution error information is transferred to the egress via a ResvErr (reservation request error) message. The egress sends a notification, indicating this failed setup process, upstream via a PathErr (path error) message, and posts back execution error information to the ingress piece by piece via the PathErr message, and a node(s) receiving the PathErr message needs to release the label that is already applied locally, and falls back an instruction that is already executed successfully by the device. The egress sends a ResvTear (reservation request tear) message to the transit to eliminate a flag bit set by original signaling, and after receiving the ResvTear message, the transit sends a PathErr message to the egress to clear the flag bit. A service having a backtracking attribute initiates rerouting, takes an explicit route in error information carried in the previous PathErr message of the ingress as a must-be-avoided condition for rerouting; and a rerouting result is converted to an explicit route object in a Path message; the Path message is sent downstream hop by hop from the ingress to apply for a label and issue an instruction to the device; when the Path message reaches the egress, a Resv message is transferred to an upstream node(s) hop by hop from the egress, the node(s) receiving the message checks an execution result of the instruction, and when the ingress also checks that the instruction is executed successfully, just as the transits have done, the present service is set up successfully.

Under a service restoration scenario, it is the first priority to quickly restore an available path to ensure that a service is not interrupted for a long time regardless of which apparatus is controlling the device. Therefore, it is very necessary to find a service backtracking solution under an SDN architecture.

### SUMMARY

The following is a brief introduction for a subject described herein in detail. The brief introduction is not intended to restrict the scope of protection of claims.

The disclosure provides a method and device for implementing service backtracking, capable of implementing service backtracking under an SDN architecture and increasing the success rate of service setup and restoration.

The embodiments of the disclosure provide a method for implementing service backtracking, applied to an SDN controller. The method includes the steps as follows.

After failing to set up a Subnetwork Connection (SNC) of a service according to a current route, a failed node is determined.

Service backtracking attribute information about the service is enquired.

When the service satisfies a service backtracking condition, service backtracking is performed on the service.

Alternatively, before setting up an SNC of a service according to a current route, the method may further include the step as follows.

After a service setup request issued by a northbound APP module is received, service backtracking attribute information about the service is acquired from the service setup request and stored.

Alternatively, the step that an SNC of a service is set up according to a current route includes the sub-steps as follows.

After a service setup request issued by a northbound APP module is received, a route is calculated, SNC information for setting up the service is determined according to the route, the SNC information is converted into a southbound protocol instruction to be issued to each network node, and it is judged whether the SNC is set up successfully according to the instruction execution situation of each network node; or,
after alarm information reported by network nodes is received, route recalculation is triggered, SNC information for restoring the service is determined according to the route recalculated, the SNC information is converted into a southbound protocol instruction to be issued to each network node, and it is judged whether the SNC is set up successfully according to the instruction execution situation of each network node.

Alternatively, the step that a failed node is determined includes the sub-steps as follows.

In a service setup process, a network node not succeeding in instruction execution is determined as a failed node; or,
in a service restoration process, a network node not succeeding in instruction execution and a network node triggering rerouting of service restoration by reporting an alarm are determined as failed nodes.

Alternatively, the step that service backtracking is performed on the service includes the step as follows.

A route is recalculated for the service, the route recalculated avoids a failed node(s).

Alternatively, after failing to set up an SNC of a service according to a current route, the method may further include the step as follows.

A notification is sent to a network node succeeding in instruction execution to indicate withdrawing an instruction that is already executed.

Alternatively, the service backtracking attribute information about the service includes the following information: information about whether the service has a service backtracking ability, or information about whether the service has the service backtracking ability, and a service backtracking count upper limit value.

Alternatively, the step that the service satisfies a service backtracking condition includes the sub-steps as follows.

The service has a service backtracking ability; or,
the service has a service backtracking ability, and a service backtracking count of the service is smaller than the service backtracking count upper limit value.

The embodiments of the disclosure provide a method for implementing service backtracking, applied to a northbound APP module. The method includes the steps as follows.

Service backtracking attribute information about a service is determined.

A service setup request is sent to an SDN controller, the service setup request carrying the service backtracking attribute information about the service.

Alternatively, the service backtracking attribute information about the service includes the following information: information about whether a service has a service backtracking ability, or information about whether a service has a service backtracking ability, and a service backtracking count upper limit value.

The embodiments of the disclosure provide a device for implementing service backtracking, applied to an SDN controller. The device includes:
a routing module, arranged to determine, after failing to set up an SNC of a service according to a current route, a failed node;
an enquiry module, arranged to enquire service backtracking attribute information about the service; and
a service backtracking module, arranged to perform, when the service satisfies a service backtracking condition, service backtracking on the service.

Alternatively, the device may further include:
a service attribute acquisition module, arranged to acquire, after receiving a service setup request issued by a northbound APP module, service backtracking attribute information about the service from the service setup request, and store the service backtracking attribute information.

Alternatively, the routing module is arranged to set up an SNC of a service according to a current route in the following manners:
after a service setup request issued by a northbound APP module is received, calculating a route, determining SNC information for setting up the service according to the route, converting the SNC information into a southbound protocol instruction, issuing the southbound protocol instruction to each network node, and judging whether the SNC is set up successfully according to the instruction execution situation of each network node; or,
after alarm information reported by network nodes is received, triggering route recalculation, determining SNC information for restoring the service according to the route recalculated, converting the SNC information into a southbound protocol instruction, issuing the southbound protocol instruction to each network node, and judging whether the SNC is set up successfully according to the instruction execution situation of each network node.

Alternatively, the routing module is arranged to determine a failed node in the following manners:
determining, in a service setup process, a network node not succeeding in instruction execution as a failed node; or,
determining, in a service restoration process, a network node not succeeding in instruction execution and a network node triggering rerouting for service restoration by reporting an alarm as failed nodes.

Alternatively, the service backtracking module is arranged to perform service backtracking on the service in the following manner:
recalculating a route for the service, the route recalculated avoiding a failed node.

Alternatively, the routing module is further arranged to send, after failing to set up an SNC of a service according to a current route, a notification to a network node succeeding in instruction execution to indicate withdrawing an instruction that is already executed.

Alternatively, the service backtracking attribute information about the service includes the following information: information about whether the service has a service backtracking ability, or information about whether the service has a service backtracking ability, and a service backtracking count upper limit value.

Alternatively, the operation that the service satisfies a service backtracking condition includes the operations as follows.

The service has a service backtracking ability; or,
the service has a service backtracking ability, and a service backtracking count of the service is smaller than the service backtracking count upper limit value.

The embodiments of the disclosure also provide a device for implementing service backtracking, applied to a northbound APP module. The device includes:
a service attribute setting module, arranged to determine service backtracking attribute information about a service; and
a service attribute issuing module, arranged to send a service setup request to an SDN controller, the service setup request carrying the service backtracking attribute information about the service.

Alternatively, the service backtracking attribute information about the service includes the following information: information about whether the service has a service backtracking ability, or information about whether the service has a service backtracking ability, and a service backtracking count upper limit value.

The embodiments of the disclosure also provide a computer-readable storage medium, which stores a computer-executable instruction. When the computer-executable instruction is executed by a processor, the above-mentioned method is implemented.

Compared with the related art, the method and device for implementing service backtracking provided in the embodiments of the disclosure provide an interface for configuring a service backtracking attribute by a user, a northbound APP module issues service backtracking attribute information about a service to an SDN controller, service backtracking is applied to service setup and service restoration under an SDN framework, and node failure information obtained by analyzing a failure instruction is taken as a must-be-avoided condition for rerouting, thereby increasing the success rate of service setup and restoration.

After the drawings and the detailed descriptions are read and understood, other aspects may be understood.

### BRIEF DESCRIPTION OF DRAWINGS

FIG. 1 is a service backtracking flow example under a GMPLS architecture in the related art.
FIG. 2 is a flowchart of a method (SDN controller) for implementing service backtracking according to an embodiment of the disclosure.
FIG. 3 is a flowchart of a method (northbound APP module) for implementing service backtracking according to an embodiment of the disclosure.
FIG. 4 is a flowchart of a device (SDN controller) for implementing service backtracking according to an embodiment of the disclosure.
FIG. 5 is a flowchart of a device (northbound APP module) for implementing service backtracking according to an embodiment of the disclosure.
FIG. 6 is a schematic diagram of an SDN architecture according to an embodiment of the disclosure.
FIG. 7 is a flowchart of a method (service setup scenario) for implementing service backtracking according to an embodiment of the disclosure.
FIG. 8 is a flowchart of a method (service restoration scenario) for implementing service backtracking according to an embodiment of the disclosure.
FIG. 9 is a device networking schematic diagram of a specific example of the disclosure.

### DETAILED DESCRIPTION

The embodiments of the disclosure will be illustrated below with the drawings in detail. It is important to note that the embodiments in the present application and the characteristics in the embodiments may be combined mutually under the condition of no conflicts.

As shown in FIG. 2, the embodiments of the disclosure provide a method for implementing service backtracking, applied to an SDN controller. The method includes the steps as follows.

In S210, after failing to set up a Subnetwork Connection (SNC) of a service according to a current route, a failed node is determined.

In S220, service backtracking attribute information about the service is enquired.

In S230, when the service satisfies a service backtracking condition, service backtracking is performed on the service.

The method may also include the following characteristics.

Alternatively, before setting up an SNC of a service according to a current route, the method further includes the step as follows.

After a service setup request issued by a northbound APP module is received, service backtracking attribute information about the service is acquired from the service setup request and stored.

Herein, the service backtracking attribute information about the service includes the following information: information about whether the service has a service backtracking ability, or information about whether the service has a service backtracking ability, and a service backtracking count upper limit value.

Alternatively, the step that an SNC of a service is set up according to a current route includes the sub-steps as follows.

After a service setup request issued by a northbound APP module is received, a route is calculated, SNC information for setting up the service is determined according to the route, the SNC information is converted into a southbound protocol instruction to be issued to each network node, and it is judged whether the SNC is set up successfully according to the instruction execution situation of each network node; or,
after alarm information reported by network nodes is received, route recalculation is triggered, SNC information for restoring the service is determined according to the route calculated newly, the SNC information is converted into a southbound protocol instruction to be issued to each network node, and it is judged whether the SNC is set up successfully according to the instruction execution situation of each network node.

Alternatively, the step that the service satisfies a service backtracking condition includes the following.

The service has a service backtracking ability; or,
the service has a service backtracking ability, and a service backtracking count of the service is smaller than the service backtracking count upper limit value.

Alternatively, the step that a failed node is determined includes the sub-steps as follows.

In a service setup process, a network node not succeeding in instruction execution is determined as a failed node; or,
in a service restoration process, a network node not succeeding in instruction execution and a network node triggering rerouting for service restoration by reporting an alarm are determined as failed nodes.

Alternatively, the step that service backtracking is performed on the service includes the step as follows.

A route is recalculated for the service, the route calculated newly avoiding the failed node(s).

Alternatively, after failing to set up an SNC of a service according to a current route, the method may further include the step as follows.

A notification is sent to a network node succeeding in instruction execution to indicate withdrawing an instruction that is already executed.

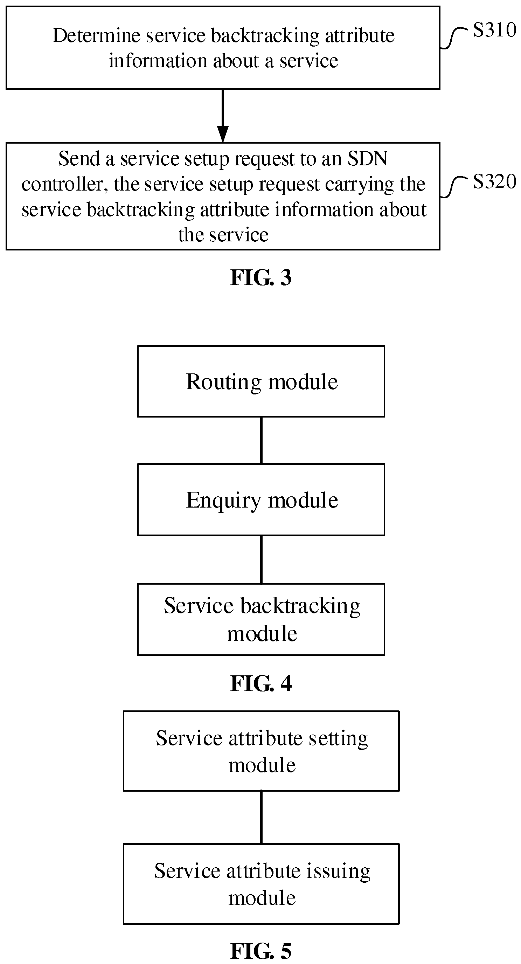

As shown in FIG. 3, the embodiments of the disclosure provide a method for implementing service backtracking, applied to a northbound APP module. The method includes the steps as follows.

In S310, service backtracking attribute information about a service is determined.

In S320, a service setup request is sent to an SDN controller, the service setup request carrying the service backtracking attribute information about the service.

The method may also include the following characteristics.

Alternatively, the service backtracking attribute information about the service includes the following information: information about whether the service has a service backtracking ability, or information about whether the service has the service backtracking ability, and a service backtracking count upper limit value.

As shown in FIG. 4, the embodiments of the disclosure provide a device for implementing service backtracking, applied to an SDN controller. The device includes:
a routing module, arranged to determine, after failing to set up an SNC of a service according to a current route, a failed node;
an enquiry module, arranged to enquire service backtracking attribute information about the service; and
a service backtracking module, arranged to perform, when the service satisfies a service backtracking condition, service backtracking on the service.

The device may also include the following characteristics: the device further includes a service attribute acquisition module.

The service attribute acquisition module is arranged to acquire, after receiving a service setup request issued by a northbound APP module, service backtracking attribute information about the service from the service setup request, and store the service backtracking attribute information.

Alternatively, the routing module is arranged to set up an SNC of a service according to a current route in the following manners:
after a service setup request issued by a northbound APP module is received, calculating a route, determining SNC information for setting up the service according to the route, converting the SNC information into a southbound protocol instruction, issuing the southbound protocol instruction to each network node, and judging whether the SNC is set up successfully according to the instruction execution situation of each network node; or,
after alarm information reported by network nodes is received, triggering route recalculation, determining SNC information for restoring the service according to the route recalculated, converting the SNC information into a southbound protocol instruction, issuing the southbound protocol instruction to each network node, and judging whether the SNC is set up successfully according to the instruction execution situation of each network node.

Alternatively, the routing module is arranged to determine a failed node in the following manners:
determining, in a service setup process, a network node not succeeding in instruction execution as a failed node; or,
determining, in a service restoration process, a network node not succeeding in instruction execution and a network node triggering rerouting for service restoration by reporting an alarm as failed nodes.

Alternatively, the service backtracking module is arranged to perform service backtracking on the service in the following manner:
recalculating a route for the service, the route calculated newly avoiding a failed node.

Alternatively, the routing module is further arranged to send, after failing to set up an SNC of a service according to a current route, a notification to a network node succeeding in instruction execution to indicate withdrawing an instruction that is already executed.

Alternatively, the service backtracking attribute information about the service includes the following information: information about whether the service has a service backtracking ability, or information about whether the service has a service backtracking ability, and a service backtracking count upper limit value.

Alternatively, the operation that the service satisfies a service backtracking condition includes the operations as follows.

The service has a service backtracking ability; or,
the service has a service backtracking ability, and a service backtracking count of the service is smaller than the service backtracking count upper limit value.

As shown in FIG. 5, the embodiments of the disclosure provide a device for implementing service backtracking, applied to a northbound APP module. The device includes:
a service attribute setting module, arranged to determine service backtracking attribute information about a service; and
a service attribute issuing module, arranged to send a service setup request to an SDN controller, the service setup request carrying the service backtracking attribute information about the service.

The device may also include the following characteristics.

The service backtracking attribute information about the service includes the following information: information about whether the service has a service backtracking ability, or information about whether the service has a service backtracking ability, and a service backtracking count upper limit value.

### Example

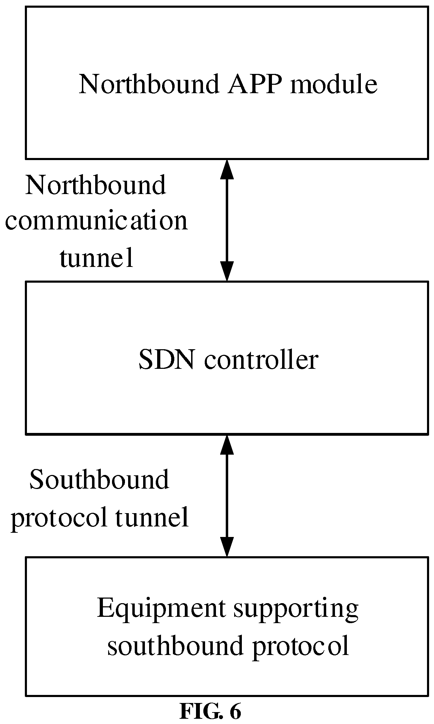

As shown in FIG. 6, an SDN architecture of the present example includes: a northbound APP module, an SDN controller and device supporting a southbound protocol.

The northbound APP module is arranged to issue service backtracking attribute information to the SDN controller via a northbound communication tunnel.

Herein, when issuing a client service setup request, the northbound APP module issues service backtracking attribute information, and can modify the service backtracking attribute information.

Herein, the northbound communication tunnel is a tunnel capable of transmitting and receiving a service setup request and customized attributes, and specific code streams may be formed using various protocols.

The SDN controller is arranged to receive a service request issued by a user, has a route calculation ability, issues an instruction to a device (optical network device) side via a southbound protocol tunnel, and can parse a response of an optical network device node.

Herein, the southbound protocol tunnel is a tunnel for information interaction between the SDN controller and the device side, and specific code streams may be formed using various protocols.

The device supporting a southbound protocol is arranged to convert protocol contents issued by the SDN controller to a specific instruction to be issued to an optical device, and can feed an execution result back to the controller.

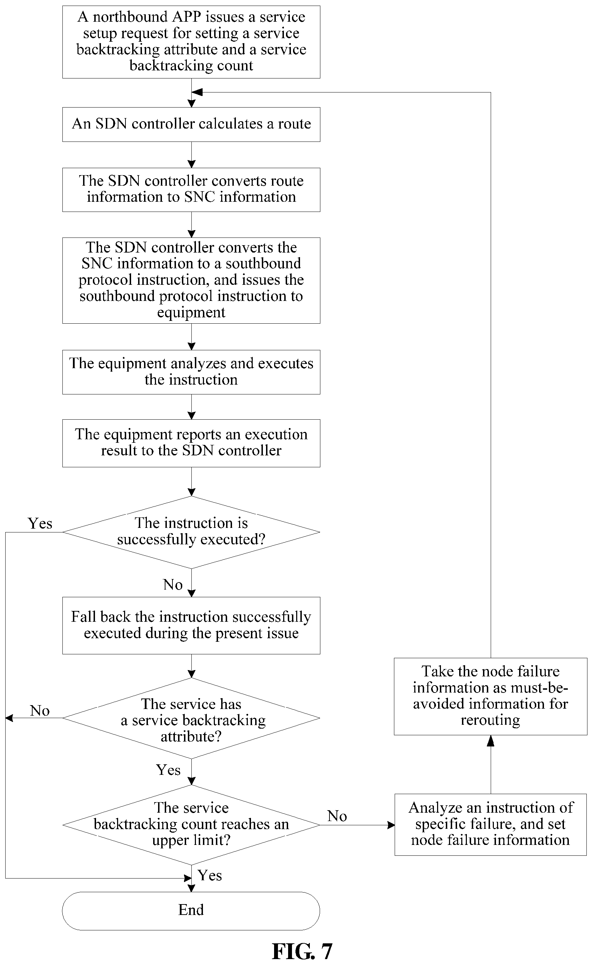

As shown in FIG. 7, the present example includes, under a service setup scenario, the following steps.

In S101, a northbound APP issues a service setup request, and identifies a service backtracking attribute of a service and a service backtracking count.

In S102, after receiving the service setup request, an SDN controller calculates a route to find an optimum path between a source node and a destination node.

In S103, the calculated route is converted to an SNC.

In S104, the SNC is converted to a southbound protocol instruction, and the southbound protocol instruction is issued to the device (network node).

In S105, the device parses out and executes a corresponding instruction.

In S106, the device reports a processing result to the SDN controller, and the SDN controller judges and analyzes the result.

In S107, if the result indicates success, service setup is successful, and the flow is ended.

In S108, if the result indicates failure, the instruction which has been issued to the device and executed successfully is fallen back.

In S109, it is checked whether the service has a service backtracking attribute.

In S110, if not, the flow is ended.

In Sill, if so, it is checked whether a current service backtracking count reaches an upper limit.

In S112, if the service backtracking count reaches the upper limit, the flow is ended.

In S113, if the service backtracking count does not reach the upper limit, an instruction of specific failure is analyzed, and node failure information is set.

In S114, the node failure information is taken as a must-be-avoided condition for rerouting.

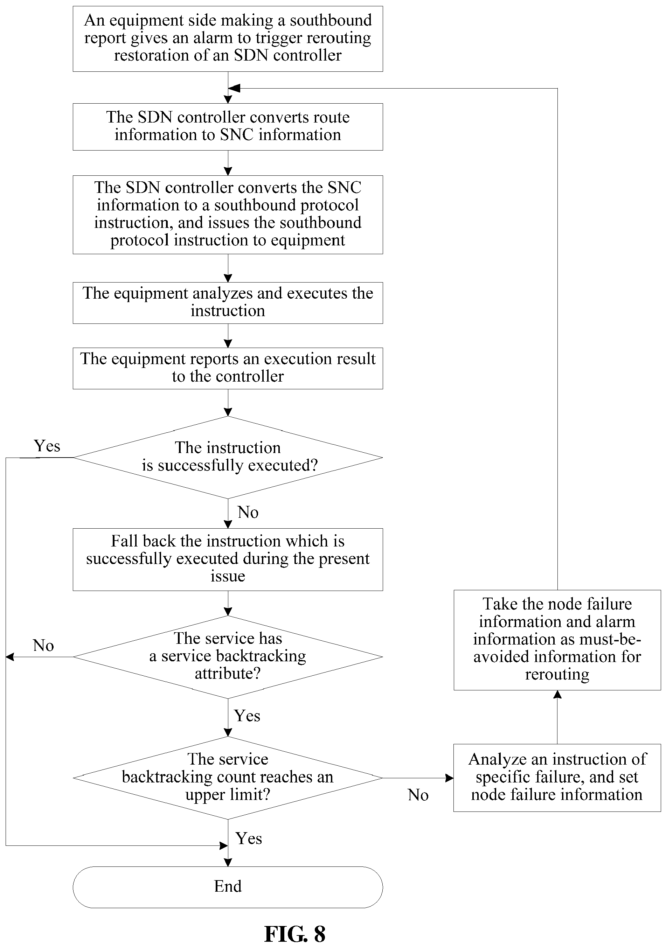

As shown in FIG. 8, the present example includes, under a service restoration scenario, the following steps.

In S101, a device side making a southbound report gives an alarm to trigger rerouting restoration of an SDN controller.

In S102, a calculated route is converted to an SNC.

In S103, the SNC is converted to a southbound protocol instruction, and the southbound protocol instruction is issued to a device (network node).

In S104, the device parses out and executes a corresponding instruction.

In S105, the device reports a processing result to the controller, and the controller judges and analyzes the result.

In S106, if the result indicates success, service restoration is successful, and the flow is ended.

In S107, if the result indicates failure, the instruction which has been issued to the device and executed successfully is fallen back.

In S108, it is checked whether the service has a service backtracking attribute.

In S109, if not, the flow is ended.

In S110, if so, it is checked whether a current service backtracking count reaches an upper limit.

In S111, if the service backtracking count reaches the upper limit, the flow is ended.

In S112, if the service backtracking count does not reach the upper limit, an instruction of specific failure is analyzed, and node failure information is set.

In S113, the node failure information and alarm information is taken as must-be-avoided conditions for rerouting.

In the following specific example, the SDN architecture includes the following components:
1) northbound APP capable of issuing a service backtracking attribute and a service backtracking count via a northbound communication tunnel, arranged to issue a service backtracking attribute and count when issuing a client service setup request, modify the service backtracking attribute and count, and issue an instruction via an http protocol,
   where the northbound communication tunnel supports the http protocol;
2) SDN controller, which supports the http protocol in a northbound manner, can correctly parse a request issued by the northbound APP, has a route calculation ability, supports an openflow protocol in a southbound manner, issues instructions to a device side via flow_mod, can process a packet_in message replied after southbound device instructions are set completely, can judge whether the instructions are fully successful according to information carried in the packet_in messages, and can analyze failed ports,
   where the southbound openflow protocol tunnel is a tunnel of interaction between the SDN controller and the device; and
3) the device supporting an openflow protocol, which can convert a flow_mod message issued by the SDN controller to a specific instruction to be issued to an optical device, and can feed a processing result back to the controller via the packet_in message.

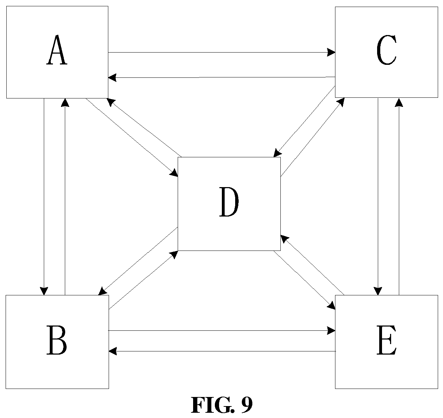

As shown in FIG. 9, there are five optical network device nodes namely A, B, C, D and E, where the node B has an internal failure.

### Specific example 1

A northbound APP issues a request to an SDN controller to request for setting up an unprotected service that does not have a restoration attribute from A to C, a route for this service is not specified, and the service is initially set to have a backtracking attribute and a maximum possible backtracking count 2.

When the SDN controller receives the service setup request issued by the northbound APP, a method for implementing service backtracking includes the steps as follows.

In S101, after receiving the service setup request issued by the northbound APP, the SDN controller calculates a route A-B-D-C.

In S102, the SDN controller converts a route to SNC information.

In S103, the SNC information is converted to match and action in a flow_mod message to be issued to the nodes A, B, C and D, where each node may receive two flow_mod messages.

In S104, the nodes A, B, C and D parse the flow_mod messages, and execute specific instructions; the nodes A, C and D execute the instructions successfully, and match and action in the two flow_mod messages of the node B are executed unsuccessfully.

In S105, the nodes A, B, C and D report execution results to the controller via packet_in messages, and the controller considers that the present operation fails.

In S106, the SDN controller issues a flow_mod message to fall back the instructions that are already executed successfully by A, C and D.

In S107, the SDN controller checks the service backtracking attribute, and finds the service has the service backtracking attribute.

In S108, the SDN controller checks a service backtracking count upper limit, and finds the current service backtracking is the first service backtracking, and because the service backtracking count upper limit is 2, the service backtracking count upper limit is not reached.

In S109, the node B is taken as a must-be-avoided node for rerouting, a route result is calculated as A-D-C.

In S110, the SDN controller converts the route to SNC information.

In S111, the SNC information is converted to match and action in a flow_mod message to be issued to the nodes A, C and D, where each node may receive two flow_mod messages.

In S112, the nodes A, C and D parse the flow_mod messages, and execute specific instructions, and the nodes A, C and D execute the instructions successfully.

In S113, the nodes A, C and D report execution results to the controller via packet_in messages, the controller considers that the present operation is successful, and the flow is ended.

### Specific example 2

A northbound APP issues a request to an SDN controller to successfully set up an unprotected service that has a restoration attribute from A to C, a route for this service is not specified, and the service is initially set to have a backtracking attribute and a maximum possible backtracking count 2.

When the SDN controller receives an alarm from southbound segments A to C, a method for implementing service backtracking includes the steps as follows.

In S101, after receiving an alarm to trigger rerouting, the SDN controller calculates a route A-B-D-C.

In S102, the SDN controller converts the route to SNC information.

In S103, the SNC information is converted to match and action in a flow_mod message to be issued to the nodes A, B, C and D, where each node may receive two flow_mod messages.

In S104, the nodes A, B, C and D parse the flow_mod messages, and execute specific instructions; the nodes A, C and D execute the instructions successfully, and match and action in the two flow_mod messages of the node B are executed unsuccessfully.

In S105, the nodes A, B, C and D report execution results to the controller via packet_in messages, and the controller considers that the present operation fails.

In S106, the SDN controller issues a flow_mod message to fall back the instructions that are already executed successfully by A, C and D.

In S107, the SDN controller checks a service backtracking attribute, and finds the service has the service backtracking attribute.

In S108, the SDN controller checks a service backtracking count upper limit, and find the current service backtracking is the first service backtracking, and because the service backtracking count upper limit is 2, the service backtracking count upper limit is not reached.

In S109, the node B and the link A-C are taken as must-be-avoided nodes for rerouting, a route result is calculated as A-D-C.

In S110, the SDN controller converts tghe route to SNC information.

In S111, the SNC information is converted to match and action in a flow_mod message to be issued to the nodes A, C and D, where each node may receive two flow_mod messages.

In S112, the nodes A, C and D parse the flow_mod messages, and execute specific instructions; and the nodes A, C and D execute the instructions successfully.

In S113, the nodes A, C and D report execution results to the controller via packet_in messages, and the controller considers that the present operation is successful, and the flow is ended.

### Specific example 3

A northbound APP issues a request to an SDN controller to request for setting up an unprotected service that does not have a restoration attribute from A to C, a route for this service is not specified, and the service is set to not have a backtracking attribute.

When the SDN controller receives the service setup request issued by the northbound APP, a method for implementing service backtracking includes the steps as follows.

In S101, after receiving the service setup request issued by the northbound APP, the SDN controller calculates a route A-B-D-C.

In S102, the SDN controller converts the route to SNC information.

In S103, the SNC information is converted to match and action in a flow_mod message to be issued to the nodes A, B, C and D, where each node may receive two flow_mod messages.

In S104, the nodes A, B, C and D parse the flow_mod messages, and execute specific instructions, the nodes A, C and D execute the instructions successfully, and match and action in the two flow_mod messages of the node B are executed unsuccessfully.

In S105, the nodes A, B, C and D report execution results to the controller via a packet_in message, and the controller considers that the present operation fails.

In S106, the SDN controller issues a flow_mod message to fall back the instruction that is already executed successfully by A, C and D.

In S107, the SDN controller checks a service backtracking attribute, and finds the service does not have the service backtracking attribute, and the flow is ended.

In addition, the embodiments of the disclosure also provide a computer-readable storage medium, which stores computer-executable instructions. The computer-executable instructions, when executed by a processor, implement the above-mentioned method.

The method and device for implementing service backtracking provided in the above-mentioned embodiments provide an interface for configuring a service backtracking attribute by a user, a northbound APP module issues service backtracking attribute information about a service to an SDN controller, service backtracking is applied to service setup and service restoration in an SDN framework, and node failure information obtained by analyzing a failure instruction is taken as a must-be-avoided condition for rerouting, thereby increasing the success rate of service setup and restoration.

Those of ordinary skill in the art may understand that all or some of the steps in the above-mentioned method may be completed by instructing relevant hardware (e.g., processor) through a program. The program may be stored in a computer-readable storage medium such as a read-only memory, a magnetic disk or an optical disk. Alternatively, all or some of the steps in the above-mentioned embodiments may be implemented by using one or more integrated circuits. Accordingly, each module/unit in the above-mentioned embodiments may be implemented in a form of hardware. For example, corresponding functions thereof are implemented by means of an integrated circuit, and each module/unit may also be implemented in a form of software function module. For example, corresponding functions thereof are implemented by executing programs/instructions stored in a memory by the processor. The present application is not limited to the combination of hardware and software in any specific form.

It is important to note that the present application may also have various embodiments. Those skilled in the art may make various corresponding changes and transformations according to the present application without departing from the spirit and essence of the present application. However, these corresponding changes and transformations should fall within the scope of protection of the appended claims of the present application.

### INDUSTRIAL APPLICABILITY

The embodiments of the disclosure provide an interface for configuring a service backtracking attribute by a user, a northbound APP module issues service backtracking attribute information about a service to an SDN controller, service backtracking is applied to service setup and service restoration in an SDN framework, and node failure information obtained by analyzing a failure instruction is taken as a must-be-avoided condition for rerouting, thereby increasing the success rate of service setup and restoration.

## Claims

1. A method for implementing service backtracking, applied to a Software Defined Network, SDN, controller, the method comprising:
determining, after failing to set up a Subnetwork Connection, SNC, of a service according to a current route, a failed node;
enquiring service backtracking attribute information about the service; and
performing service backtracking on the service, when the service satisfies a service backtracking condition.

2. The method according to claim 1, wherein before setting up the SNC of the service according to the current route, the method further comprises:
after receiving a service setup request issued by a northbound APP module, acquiring the service backtracking attribute information about the service from the service setup request, and storing the service backtracking attribute information.

3. The method according to claim 1 or 2, wherein setting up an SNC of a service according to a current route comprises:
after receiving a service setup request issued by a northbound APP module, calculating the route, determining SNC information for setting up the service according to the route, converting the SNC information into a southbound protocol instruction, issuing the southbound protocol instruction to each network node, and judging whether the SNC is set up successfully according to an instruction execution situation of each network node; or,
after receiving alarm information reported by one or more network nodes, triggering route recalculation, determining SNC information for restoring the service according to a route recalculated, converting the SNC information into a southbound protocol instruction, issuing the southbound protocol instruction to each network node, and judging whether the SNC is set up successfully according to the instruction execution situation of each network node.

4. The method according to claim 3, wherein determining a failed node comprises:
determining, in a service setup process, a network node not succeeding in instruction execution as a failed node; or,
determining, in a service restoration process, each of a network node not succeeding in instruction execution and a network node triggering rerouting for service restoration by reporting an alarm as a failed node.

5. The method according to claim 1 or 2, wherein performing service backtracking on the service comprises:
recalculating a route avoiding the failed node for the service.

6. The method according to claim 1 or 2, wherein after failing to set up the SNC of the service according to the current route, the method further comprises:
sending a notification to a network node succeeding in instruction execution, to indicate withdrawing an instruction already executed.

7. The method according to claim 1 or 2, wherein the service backtracking attribute information about the service comprises the following information: information about whether the service has a service backtracking ability, or information about whether the service has the service backtracking ability and a service backtracking count upper limit value.

8. The method according to claim 7, wherein the service satisfies a service backtracking condition when one of the following is true:
the service has a service backtracking ability; or,
the service has a service backtracking ability, and a service backtracking count of the service is smaller than the service backtracking count upper limit value.

9. A method for implementing service backtracking, applied to a northbound APP module, the method comprising:
determining service backtracking attribute information about a service; and
sending a service setup request to a Software Defined Network, SDN, controller, the service setup request carrying the service backtracking attribute information about the service.

10. The method according to claim 9, wherein the service backtracking attribute information about the service comprises the following information: information about whether the service has a service backtracking ability, or information about whether the service has the service backtracking ability and a service backtracking count upper limit value.

11. A device for implementing service backtracking, applied to a Software Defined Network, SDN, controller, comprising:
a routing module, arranged to determine, after failing to set up a Subnetwork Connection, SNC, of a service according to a current route, a failed node;
an enquiry module, arranged to enquire service backtracking attribute information about the service; and
a service backtracking module, arranged to perform service backtracking on the service, when the service satisfies a service backtracking condition.

12. The device according to claim 11, further comprising:
a service attribute acquisition module, arranged to acquire, after receiving a service setup request issued by a northbound APP module, the service backtracking attribute information about the service from the service setup request, and store the service backtracking attribute information.

13. The device according to claim 11 or 12, wherein the routing module is arranged to set up an SNC of a service according to a current route in the following manners:
after receiving a service setup request issued by a northbound APP module, calculating a route, determining SNC information for setting up the service according to the route, converting the SNC information into a southbound protocol instruction, issuing the southbound protocol instruction to each network node, and judging whether the SNC is set up successfully according to the instruction execution situation of each network node; or,
after receiving alarm information reported by one or more network nodes, triggering route recalculation, determining SNC information for restoring the service according to a route recalculated, converting the SNC information into a southbound protocol instruction, issuing the southbound protocol instruction to each network node, and judging whether the SNC is set up successfully according to the instruction execution situation of each network node.

14. The device according to claim 13, wherein the routing module is arranged to determine a failed node in the following manners:
determining, in a service setup process, a network node not succeeding in instruction execution as a failed node; or,
determining, in a service restoration process, each of a network node not succeeding in instruction execution and a network node triggering rerouting for service restoration by reporting an alarm as a failed node.

15. The device according to claim 11 or 12, wherein the service backtracking module is configured to perform service backtracking on the service in the following manner:
recalculating a route avoiding the failed node for the service.

16. The device according to claim 11 or 12, wherein the routing module is further configured to send, after failing to set up an SNC of a service according to a current route, a notification to a network node succeeding in instruction execution, to indicate withdrawing an instruction already executed.

17. The device according to claim 11 or 12, wherein the service backtracking attribute information about the service comprises the following information: information about whether the service has a service backtracking ability, or information about whether the service has the service backtracking ability and a service backtracking count upper limit value.

18. The device according to claim 17, wherein the service satisfies a service backtracking condition when one of the following is true:
the service has a service backtracking ability; or,
the service has a service backtracking ability and a service backtracking count of the service is smaller than the service backtracking count upper limit value.

19. A device for implementing service backtracking, applied to a northbound APP module, comprising:
a service attribute setting module, arranged to determine service backtracking attribute information about a service; and
a service attribute issuing module, arranged to send a service setup request to a Software Defined Network, SDN, controller, the service setup request carrying the service backtracking attribute information about the service.

20. The device according to claim 19, wherein the service backtracking attribute information about the service comprises the following information: information about whether the service has a service backtracking ability, or information about whether the service has the service backtracking ability, and a service backtracking count upper limit value.
